# EUROPEAN PATENT APPLICATION

(11) **EP 4 837 839 A1**
(43) Date of publication of application: **11.11.2026**
(21) Application number: 26171862.1
(22) Date of filing: 13.04.2026
(51) Int. Cl.: B64D 27/34, B64D 27/40, B64D 29/00, B64D 31/16, B64D 33/08, B64D 35/026, H02K 9/19, B64D 29/04

(54) **PROPULSION SYSTEM WITH LUBRICATION AND THERMAL SYSTEM HAVING NESTED ARRANGEMENT**

(30) Priority: 06.05.2025 US 202519199775
(71) Applicant: Honeywell International Inc., Charlotte, NC 28202 (US)
(72) Inventor: WONG, Yates, Charlotte, 28202 (US); VIZCAINO, Jason, Charlotte, 28202 (US); YANOF, Joseph, Charlotte, 28202 (US)
(74) Representative: Ingrassia, Fisher & Lorenz UK Ltd.

(57) **Abstract**

A propulsion system includes a support structure (150) and a rotational output member (180) supported for rotation about an axis. The support structure (150) and output member (180) are nested together along the axis. The system also includes a bearing (182) and a motor (130) configured for driving rotation of the rotational output member (180) relative to the support structure (150) about the axis. The system further includes a fluid system configured to circulate a fluid through the propulsion system and supply the fluid to the bearing (182) and to the motor (130). The fluid system includes a fluid pump (192) extending in a circumferential direction about the axis, a fluid tank (170) defined by the support structure and extending in the circumferential direction about the axis, and a fluid sump (220) defined by the support structure.

## Description

### TECHNICAL FIELD

The present disclosure generally relates to a propulsion system and, more particularly, relates to a propulsion system with a lubrication and a thermal system having a nested arrangement.

### BACKGROUND

Propulsion systems, such as propeller propulsion systems, are provided for various uses. For example, electric propeller propulsion systems are proposed for various aircraft, watercraft, and/or other vehicles.

However, such propulsion systems may suffer from various disadvantages. For example, these systems may be heavy and bulky. These systems may also have a high part count and/or may be difficult to manufacture. In particular, it may be difficult to incorporate a fluid lubrication system and/or a thermal management system within the propulsion system without significantly increasing weight, size, part count, manufacturing complexity, and other disadvantages.

Thus, there remains a need for a propeller propulsion system (e.g., an electric propeller propulsion system) for an aircraft with fluid lubrication and thermal management systems having reduced weight, lower part count, and increased manufacturing efficiency. The present disclosure addresses at least these needs.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A propulsion system for a vehicle is disclosed that includes a support structure that defines an axis and a rotational output member supported for rotation about the axis. The support structure and the rotational output member are nested together along the axis. The propulsion system further includes a bearing that supports the rotational output member for rotation about the axis relative to the support structure. Furthermore, the propulsion system includes a motor supported between the support structure and the rotational output member and configured for driving rotation of the rotational output member relative to the support structure. Moreover, the propulsion system includes a fluid system configured to circulate a fluid through the propulsion system and supply the fluid to the bearing and to the motor. The fluid system includes a fluid pump extending in a circumferential direction about the axis, a fluid tank defined by the support structure and extending in the circumferential direction about the axis, and a fluid sump defined by the support structure.

In another embodiment, a method of manufacturing a propulsion system for a vehicle is disclosed. The method includes providing a support structure that defines an axis. The method further includes supporting a rotational output member for rotation about the axis using a bearing, including nesting the support structure and the rotational output member together along the axis. Moreover, the method includes supporting a motor between the support structure and the rotational output member. The motor is configured for driving rotation of the rotational output member relative to the support structure. Moreover, the method includes operatively connecting a fluid system configured to circulate a fluid through the propulsion system and supply the fluid to the bearing and to the motor. The fluid system includes a fluid pump extending in a circumferential direction about the axis, a fluid tank defined by the support structure and extending in the circumferential direction about the axis, and a fluid sump defined by the support structure.

In an additional embodiment, a propulsion system for an aircraft is disclosed. The propulsion system includes a support structure that defines an axis. The support structure includes a bearing opening. The propulsion system further includes a rotational output member supported for rotation about the axis. The rotational output member includes an annular bearing mount that is received within the bearing opening. The support structure is nested within the rotational output member along the axis. The propulsion system also includes a variable pitch propeller that is attached to the rotational output member for rotation therewith. The rotational output member is disposed between the variable pitch propeller and the support structure along the axis. Moreover, the propulsion system includes a bearing that is mounted on the bearing mount within the bearing opening and that supports the rotational output member and the variable pitch propeller for rotation about the axis relative to the support structure. Also, the propulsion system includes an electric motor supported between the support structure and the rotational output member and configured for driving rotation of the rotational output member and the variable pitch propeller relative to the support structure. Furthermore, the propulsion system includes a fluid system configured to circulate a fluid through the propulsion system and supply the fluid to the bearing and to the motor. The fluid system includes a fluid pump extending in a circumferential direction about the axis, a fluid tank defined by the support structure and extending in the circumferential direction about the axis, and a fluid sump extending in the circumferential direction and defined by the support structure. The fluid sump overlaps the fluid tank radially and is disposed radially outboard from the fluid tank with respect to the axis.

Other desirable features and characteristics of the apparatus and method will become apparent from the subsequent detailed description and the appended claims, taken in conjunction with the accompanying drawings and the preceding background.

### BRIEF DESCRIPTION OF THE DRAWINGS

The present disclosure will hereinafter be described in conjunction with the following drawing figures, wherein like numerals denote like elements, and wherein:
FIG. 1 is a schematic side view of an aircraft with an electric propulsion system (EPS) configured according to example embodiments of the present disclosure, wherein the aircraft is shown in a nose-down pitch attitude;
FIG. 2 is a cross-sectional view of a support structure of the EPS of FIG. 1; and
FIG. 3 is a schematic side view of the EPS of FIG. 1 shown in a vertical pitch attitude.

### DETAILED DESCRIPTION

The following detailed description is merely exemplary in nature and is not intended to limit the present disclosure or the application and uses of the present disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the present disclosure and not to limit the scope of the present disclosure which is defined by the claims. Furthermore, there is no intention to be bound by any expressed or implied theory presented in the preceding technical field, background, brief summary, or the following detailed description.

The present disclosure generally relates to propulsion systems, such as electric propeller-based propulsion systems for aircraft, watercraft, and the like. The propulsion systems of the present disclosure may be lightweight to offset the weight of power electronic systems components such as batteries, inverters, conductive material, fuel cells, etc.

The propulsion system of the present disclosure may include a plurality of components, such as a fluid pump, fluid tank, one or more bearings, bearing sump, etc. which are compactly arranged and provided in a lightweight package. These sub-systems may be arranged to form a nested, unified design combining multiple components. The system may circulate a single working fluid for both lubricating the bearing(s) and for cooling the motor and/or other components. These functional features are incorporated into the propulsion system of the present disclosure to reduce weight, package size, and cost. The system also provides high strength and robust support of these components.

Generally, the propulsion system may include a support structure (i.e., chassis member, frame member, etc.), which defines an axis. The propulsion system may also include a rotational output member, which is supported for rotation about the axis relative to the support structure. A variety of features may be disposed in a nested arrangement with respect to the axis. For example, the support structure may be nested and received partly within the rotational output member. Also, the support structure may be a unitary member that defines a number of features, such as, a fluid tank, a fluid sump, a bearing mount, a motor mount, which extend at least partly about the axis in the circumferential direction. A plurality of these features may be substantially concentric and centered about the axis. Also, a plurality of these features may be disposed axially within a relatively small axial range (as measured along the axis). At least some of these features may be received within others. Also, some of these features may be spaced apart in the radial direction and may overlap radially with respect to the axis.

In some embodiments, the support structure may include a through-hole, bore, central opening, etc., which extends along the axis, and which accommodates a propeller variable-pitch control rod. Radially outward from the axis, the support structure may define an annular fluid tank, and a fluid pump may be supported proximate (e.g., within) the tank. The pump may be a rotary pump that extends about the axis in the circumferential direction. The pump housing and the fluid tank may be located radially inside of a bearing sump, which is also defined by the support structure. A bearing may be included for rotationally supporting the output member on the support structure, and the bearing may be disposed inside the bearing sump. The support structure may be substantially disposed radially inside the rotational output member. Also, the propulsion system may be configured with either an out-runner motor or an in-runner motor. In addition, the support structure may support mounted components of the propulsion system, including a motor control unit (MCU), a heat exchanger, and/or other components. This integration of features allows reduction in overall complexity, part count, weight, and cost.

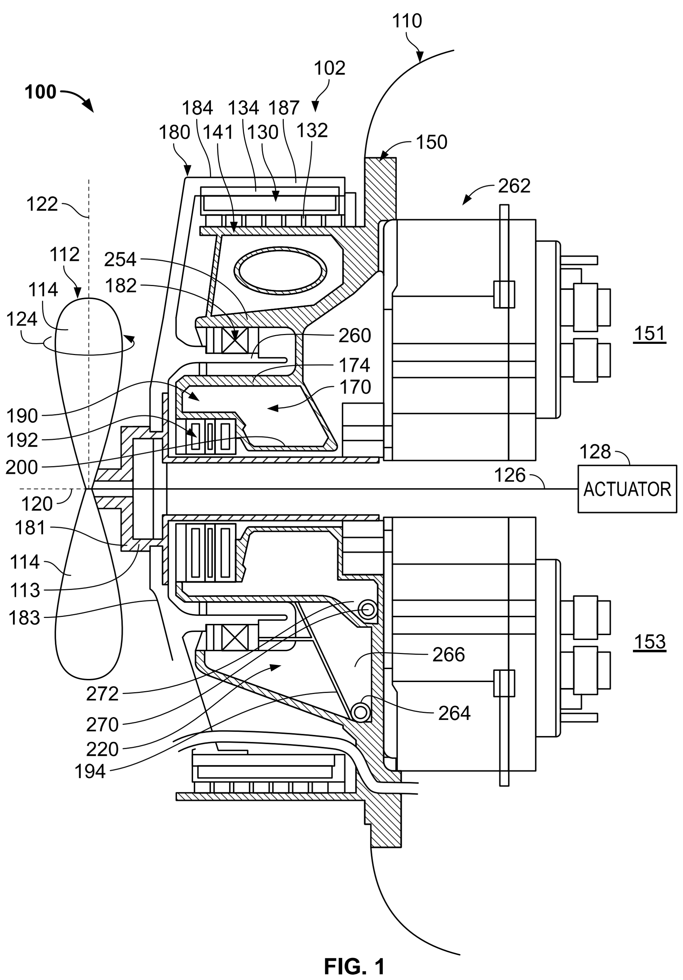

Referring now to FIG. 1, a vehicle such as an aircraft 100 is illustrated. The aircraft 100 may include a propulsion system 102, such as an electric propulsion system (EPS) 102, which is configured according to the teachings of the present disclosure. It will be appreciated that the EPS 102 may be configured for another vehicle, such as a watercraft, etc. without departing from the scope of the present disclosure.

Generally, the aircraft 100 may include an aircraft body 110 and a propeller 112 with a plurality of blades 114. The propeller 112 may be rotatably attached to the aircraft body 110 and supported for rotation about a central axis 120 relative thereto. For reference purposes, a first side 151 and a second side 153 of the axis 120 are indicated.

The EPS 102 may include an electric motor 130, which is operably attached to the propeller 112 for driving rotation of the propeller 112 about the axis 120 and creating thrust for the aircraft 100. The motor 130 may be powered by batteries, a fuel cell, or other electrical power source.

The blades 114 of the propeller 112 may be spaced apart in a circumferential direction about the axis 120, and each blade may extend longitudinally along a respective radial axis 122 relative to the axis 120. In some embodiments, the blades 114 may have variable pitch configuration so as to be rotatable and adjustable about the respective radial axis 122 as indicated by arrow 124. The EPS 102 may include a variable pitch pushrod 126, which extends along the axis 120 and operatively attaches the blades 114 to a variable pitch actuator 128. During operation, the actuator 128 may selectively actuate the pushrod 126 axially along the axis 120, thereby rotating the blades 114 about the respective radial axis 122 and changing pitch of the blades 114.

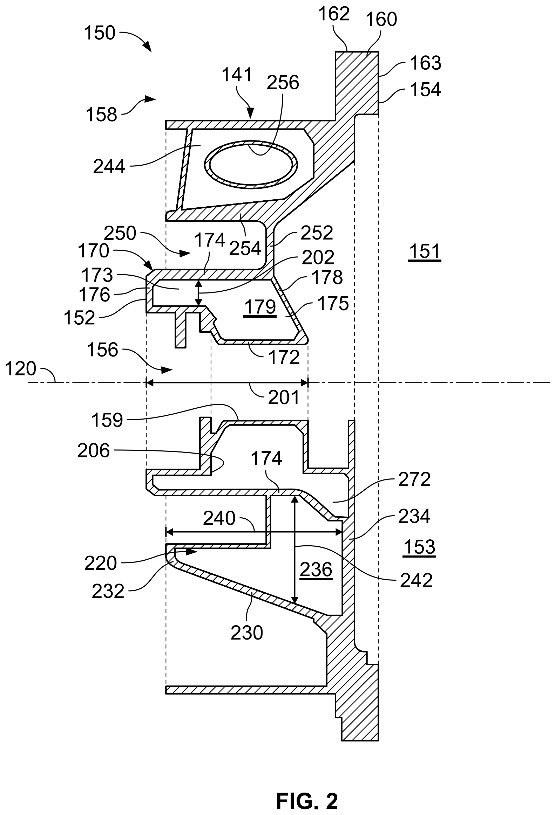

As shown in FIGS. 1 and 2, the EPS 102 may include a support structure 150. The support structure 150 may be unitary, one-piece, and monolithic in some embodiments. The support structure 150 may be formed from and/or may include a metallic material, such as an aluminum alloy, titanium alloy, or otherwise. In additional embodiments, the support structure 150 may be formed from and/or may include a composite material. The support structure 150 may be fixedly attached and mounted to the aircraft body 110. The support structure 150 may include a number of features, which will be discussed in detail below.

Referring to FIG. 1, the EPS 102 may also include a rotational output member 180. The rotational output member 180 may be connected to the propeller 112 and may rotate therewith. For example, the rotational output member 180 and propeller 112 may be attached via a cylindrical propeller mount 113 that is fixed within and received in the central hub 181. The rotational output member 180 may be rotationally attached to the support structure 150 via a bearing 182. Also, the electric motor 130 may be operatively connected to the support structure 150 and the rotational output member 180 and radially disposed therebetween. As such, the motor 130 may drive rotation of the rotational output member 180 and the propeller 112 relative to the support structure 150 and the aircraft body 110.

Also, the support structure 150 and the rotational output member 180 may be nested together along the axis 120 and concentric. Areas of the rotational output member 180 may radially overlap complimentary areas of the support structure 150. Portions of the support structure 150 may be received axially within and may be disposed radially inboard of complimentary portions of the rotational output member 180. In other words, the support structure 150 may be nested within the rotational output member 180 along the axis 120. In addition to, or in the alternative, portions of the rotational output member 180 may be received axially within and may be disposed radially inboard of complimentary portions of the support structure 150.

As represented in FIG. 1, the EPS 102 may be configured as a direct-drive EPS 102 such that rotational power output from the motor 130 is directly received by the propeller 112. In other words, the EPS 102 may be gearbox-less with no transmission, gearbox, gear reduction, etc. between the motor 130 and the propeller 112.

The EPS 102 may further include a fluid system 190. The fluid system 190 may contain and circulate a working fluid (e.g., an oil) therethrough. In some embodiments, the fluid system 190 may include features for lubricating and cooling the bearing 182. In additional embodiments, the fluid system 190 may include features for cooling the motor 130 and/or other areas of the EPS 102. In further embodiments, the fluid system 190 may circulate a common (i.e., the same) working fluid to both the lubricating and cooling the bearing 182 as well as cooling the motor 130. The support structure 150 may incorporate, define, or otherwise include a number of features associated with the fluid system 190 as will be discussed.

Referring now to FIGS. 1 and 2, the support structure 150 will be discussed in greater detail. The support structure 150 may be generally cylindrical, annular, and disc-shaped. The support structure 150 may be a unitary, monolithic, and one-piece part. The support structure 150 may be a relatively thin-walled member with a majority of the support structure 150 being hollow (i.e., with one or more interior voids, pockets, cavities, tanks, etc.). The support structure 150 may be formed via casting, additive manufacturing, or otherwise. The support structure 150 may define the axis 120.

The support structure 150 may include a first axial end 152 and a second axial end 154, which are separated along the axis 120. The support structure 150 may also include an inner radial area 156 and an outer radial area 158, which extend generally about the axis 120 in the circumferential direction, which are spaced apart radially relative to the axis 120, and which extend axially between the first and second axial ends 152, 154.

The support structure 150 may include a central opening 159 (i.e., bore, through-hole, etc.) that is centered on the axis 120 and that extends axially through the support structure 150. The central opening 159 may have a circular cross-section taken normal to the axis 120.

The support structure 150 may include an end mount 160. The end mount 160 may be annular and ring-like so as to encircle the axis 120. The end mount 160 may include an outer peripheral edge 162. The end mount 160 may also include an outer face 163 that faces along the axis 120 away from the first axial end 152. The end mount 160 may be attached to the chassis of the aircraft 100.

The support structure 150 may further include a fluid tank 170. The fluid tank 170 may be a hollow vessel that is rounded (e.g., annular) and that extends in the circumferential direction about the axis 120. The fluid tank 170 may be disposed radially inward from the outer peripheral edge 162 and may be "hung" from the end mount 160 so as to project axially therefrom and toward the rotational output member 180. The fluid tank 170 may include and/or may be defined by an inner radial wall 172, an intermediate radial wall 174, a first axial wall 176 and a second axial wall 178, which cooperatively define an annular cavity 179 for containing a working fluid 200 (e.g., oil). The inner radial wall 172 may be disposed at the inner radial area 156 and may define the opening 159 on an inside diameter (ID) surface thereof. The first axial wall 176 may be disposed proximate the first axial end 152 of the support structure 150. The second axial wall 178 may be disposed proximate the second axial end 154 of the support structure 150. The intermediate radial wall 174 may be spaced outward radially from the inner radial wall 172.

The radial cross sectional profile of the fluid tank 170 may have an axial dimension 201 (measured between the first axial wall 176 and the second axial wall 178) that is significantly greater than a radial dimension 202 (measured between the inner radial wall 172 and the intermediate radial wall 174). As such the cross sectional profile may be "flattened" in the radial direction and may be "elongated" along the axial direction. Also, the cavity 179 may include a first annular portion 173, which is axially disposed closer to the first axial end 152, and a second annular portion 175, which is axially disposed closer to the second axial end 154. The radial dimension 202 of the first annular portion 173 may be significantly less than the radial dimension 202 of the second annular portion 175. Furthermore, the first annular portion 173 may be offset radially outward from the second annular portion 175 so as to define an annular step 206 between the first and second annular portions 173, 175. Accordingly, the radial cross sectional profile of the cavity 179 (taken along a radial plane through the axis 120) may vary as the cavity 179 extends circumferentially about the axis 120. For example, on the first side 151 of the axis 120, the second axial wall 178 may be canted at an acute angle relative to the axis 120, whereas the second axial wall 178 on the second side 153 may be disposed substantially normal to the axis 120. Accordingly, the area of the radial cross-sectional profile on the first side 151 of the axis 120 may be less than the area of the radial cross-sectional profile on the second side 153 of the axis 120.

The support structure 150 may further include a fluid sump 220. The fluid sump 220 may be a hollow vessel that is rounded to extend at least partly about the axis 120 in the circumferential direction. The fluid sump 220 may be disposed outboard radially with respect to the fluid tank 170. Also, the fluid sump 220 be axially disposed so as to overlap the fluid tank 170 in the radial direction relative to the axis 120. In other words, the fluid sump 220 may be disposed axially between the first axial wall 176 and the second axial wall 178 on the second side 153 of the axis 120 as shown in FIG. 2. Accordingly, the fluid tank 170 may be nested axially within the fluid sump 220.

The fluid sump 220 may be "hung" from the end mount 160 so as to project axially therefrom and toward the rotational output member 180. The fluid sump 220 may be defined substantially on the second side 153 of the axis 120. The fluid sump 220 may include and/or may be defined by an outer radial wall 230, the intermediate radial wall 174, a first axial wall 232, and a second axial wall 234, which cooperatively define a sump cavity 236 for collecting the working fluid as it flows from the bearing 182 as will be discussed.

The outer radial wall 230 may be spaced outward radially from the intermediate radial wall 174. The first axial wall 232 may be disposed proximate the first axial end 152 of the support structure 150. The second axial wall 234 may be disposed proximate the second axial end 154 of the support structure 150. The intermediate radial wall 174 may be shared by and common to both the fluid sump 220 and the fluid tank 170. In other words, the intermediate radial wall 174 may partly define both the fluid sump 220 and the fluid tank 170 and may define a fluid barrier radially therebetween.

The radial cross sectional profile of the fluid sump 220 may have an axial dimension 240 (measured between the first axial wall 232 and the second axial wall 234) that is significantly greater than a radial dimension 242 (measured between the outer radial wall 230 and the intermediate radial wall 174). As such, the cross sectional profile may be "flattened" in the radial direction and may be "elongated" along the axial direction. Also the radial dimension 242 may increase as the sump cavity 236 extends axially from the first axial end 152 toward the second axial end 154. The outer radial wall 230 may be canted at an acute angle relative to the axis 120 such that the radial dimension 242 may increase gradually as the sump cavity 236 extends axially from the first axial end 152 toward the second axial end 154.

The support structure 150 may further include a motor mount 141. The motor mount 141 may be annular and centered on the axis. The motor mount 141 may extend axially from the end mount 160. The motor mount 141 may be spaced outward radially from the outer radial wall 230 of the fluid sump 220. The motor mount 141 may define a significant portion of the outer radial area 158 of the support structure 150.

The support structure 150 may further include a bearing opening 250. The bearing opening 250 may be annular and open toward the first axial end 152. The bearing opening 250 may be defined radially between the fluid tank 170 and the fluid sump 220 at the first axial end 152. The bearing opening 250 may also be defined by an internal axial wall 252, which is disposed normal to the axis 120 and which is fixed to the intermediate radial wall 174. The bearing opening 250 may also be defined by an internal radial wall 254, which is spaced radially from the intermediate radial wall 174 across the bearing opening, and which is fixed to the internal axial wall 252.

The support structure 150 may additionally include one or more braces 244. As shown in FIG. 2, the brace 244 may comprise a flat and planar plate that is disposed on the first side 151 of the axis 120. The brace 244 may be oriented such that the brace 244 radiates from the axis 120, and the brace 244 may be fixed to the motor mount 141 on an outer radial edge thereof and to the internal radial wall 254 on an inner radial edge thereof. The brace 244 may also include one or more weight-saving apertures 256. It will be appreciated that there may be a plurality of such braces 244, which are spaced apart circumferentially about the axis 120.

Referring now to FIG. 1, the rotational output member 180 will be discussed according to example embodiments. The rotational output member 180 may be generally cylindrical, annular, and disc-shaped. The support structure 150 may be a relatively thin-walled member with wall thickness on the order of the wall thicknesses of the support member 150. The rotational output member 180 may be unitary, one-piece, and monolithic in some embodiments. The rotational output member 180 may be formed from and/or may include a metallic material, such as an aluminum alloy, titanium alloy, or otherwise. In additional embodiments, the rotational output member 180 may be formed from and/or may include a composite material. The rotational output member 180 may be fixedly attached to the propeller 112.

The rotational output member 180 may include a central hub 181 with a central opening that accommodates the pushrod 126. The rotational output member 180 may also include a disc-shaped cap member 183 that extends radially from the central hub 181 and in the circumferential direction about the axis 120. The rotational output member 180 may further include an outer rim 184, which turns and extends axially from the outer radial portion of the cap member 183. Additionally, the rotational output member 180 may include a motor mount 187, which is included on the outer rim 184.

The rotational output member 180 may further include a bearing mount 260. The bearing mount 260 may be annular and may be centered on the axis 120. The bearing mount 260 may be "hung" from the cap member 183 and may extend axially therefrom toward the support structure 150 to be received within the bearing opening 250.

The bearing 182 may be a rolling-element bearing in some embodiments. The bearing 182 may be mounted on the bearing mount 260 of the output member 180 and may be supported on the internal radial wall 254. In additional embodiments, the bearing 182 may be supported between the bearing mount 260 and the intermediate radial wall 174. Accordingly, the bearing 182 may support the output member 180 for rotation about the axis 120 relative to the support structure 150.

Additionally, the electric motor 130 may include a stator member 132 and a rotor member 134, which are operatively coupled together for driving rotation of the output member 180. The stator member 132 may be fixedly attached to the motor mount 141 of the support member 150, and the rotor member 134 may be fixedly attached to the outer rim 184 of the output member 180.

As represented on the first side 151 of the axis 120 in FIG. 1, the motor 130 may configured in an out-runner configuration in which the motor mount 141 of the support structure 150 is received radially within the outer rim 184 with the electric motor 130 disposed radially therebetween. As such the rotor member 134 may be disposed radially outside the stator member 132. Alternatively, as represented on the second side 153 of the axis 120, the motor 130 may be configured in an in-runner configuration in which the motor mount 141 of the support structure 150 is radially outboard of the outer rim 184 of the output member 180 with the rotor member 134 disposed radially inside the stator member 132.

The EPU 102 may further include a motor electronics package 262. The motor electronics package 262 may comprise a motor controller, an inverter, a bus, a battery, connectors, and/or other electronic components for operating the motor 130. In some embodiments, the motor electronics package 262 may be mounted on the outer face 163 of the end mount 160 and may extend axially therefrom away from the output member 180. Furthermore, in some embodiments, one or more heat exchangers or other components, may be mounted to and/or supported by the support structure 150 at the second axial end 154.

The fluid system 190 of the EPU 102 may comprise the fluid tank 170 and the fluid sump 220. Also, the fluid system 190 may include a fluid pump 192. The fluid pump 192 may be a rotary pump. The fluid pump 192 may be disposed at least partly within the fluid tank 170 and may be arranged about the axis 120, proximate the first axial end 152. The fluid system 190 may also include a scavenge pump 194. The fluid system 190 may further include a number of fluid lines, pipes, conduits, passages for circulating the working fluid within the EPU 102. For example, in some embodiments, the fluid system 190 may include a fluid connection from a scavenge intake 264 of the fluid sump 220 to a fluid inlet of the fluid tank 170, and the scavenge pump 194 may provide the working fluid from the sump 220 to the fluid tank 170. Inside the fluid tank 170, the working fluid may flow into a pump intake 270, and the fluid pump 192 may provide the working fluid to an inlet of the motor 130 (i.e., to cooling fluid passages of the motor 130). The fluid pump 192 may also pump the working fluid from the fluid tank 170 to an inlet of the bearing 182 (i.e., to lubrication/cooling fluid passages of the bearing 182). The fluid sump 220 may also be fluidly connected downstream of the motor 130 and the bearing 182 so as to collect the working fluid flowing therefrom. From the fluid sump 220, the scavenge pump 194 may provide the working fluid back to the fluid tank 170 for recirculation through the fluid system 190 as described above.

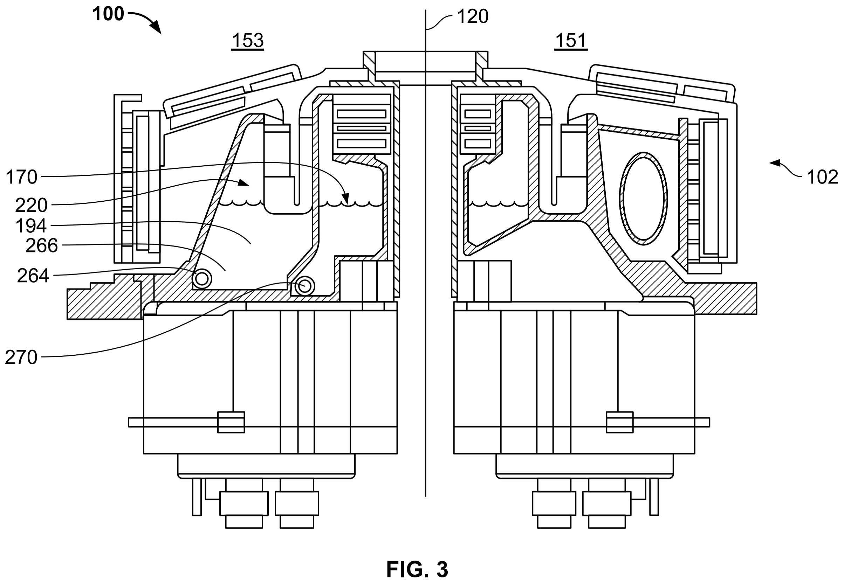

The pump intake 270 may be disposed on the second side 153 of the axis 120 within an intake area 272 of the fluid tank 170. The intake area 272 may be disposed proximate the second axial end 154. The intake area 272 may be spaced radially away from the axis 120. The intake area 272 may be disposed outboard radially from the second annular portion 175 of the fluid tank 170. Similarly, the scavenge intake 264 may be disposed on the second side 153 of the axis 120 within a scavenge area 266 of the fluid sump 220. The scavenge area 266 may be disposed proximate the second axial end 154 and spaced radially apart from the axis 120. As such, the intake area 272 and the scavenge intake 264 are more likely to remain submerged beneath the fluid level of the working fluid, even in the nose-up orientation of FIG. 3. More specifically, the second axial end 154 may be directed toward a tail end of the aircraft 100, the top side of the aircraft 100 may be disposed on the first side 151 of the axis 120, and the bottom side of the aircraft 100 may be disposed on the second side 153 of the axis 120. Thus, the scavenge intake 264 and the intake area 272 may be positioned so as to be gravity-fed in both the nose-down pitch attitude (FIG. 1) and the vertical pitch attitude (FIG. 3).

Accordingly, the EPU 102 of the vehicle 100 may be lightweight, compact, and may have a relatively low part-count. The support structure 150 may also provide high strength support of the propeller 112 and the rotating group. The EPU 102 may be manufactured efficiently as well.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A propulsion system for a vehicle comprising:
a support structure that defines an axis;
a rotational output member supported for rotation about the axis, the support structure and the rotational output member nested together along the axis;
a bearing that supports the rotational output member for rotation about the axis relative to the support structure;
a motor supported between the support structure and the rotational output member and configured for driving rotation of the rotational output member relative to the support structure; and
a fluid system configured to circulate a fluid through the propulsion system and supply the fluid to the bearing and to the motor, wherein the fluid system includes a fluid pump extending in a circumferential direction about the axis, a fluid tank defined by the support structure and extending in the circumferential direction about the axis, and a fluid sump defined by the support structure.

2. The propulsion system of claim 1, wherein the motor is directly attached to the rotational output member in a direct drive configuration.

3. The propulsion system of claim 1, wherein the support structure includes a central opening extending through the support structure and that is centered on the axis.

4. The propulsion system of claim 1, wherein the support structure is nested within the rotational output member along the axis.

5. The propulsion system of claim 4, wherein the support structure includes an annular bearing opening and the rotational output member includes a bearing mount that is received within the annular bearing opening, the bearing disposed radially between the bearing mount and the support structure.

6. The propulsion system of claim 5, wherein the support structure includes a radial wall that defines the bearing opening, a motor mount that supports the motor, and a brace that extends radially between the radial wall and the motor mount.

7. The propulsion system of claim 1, wherein the fluid tank is defined by a first axial wall and a second axial wall that are spaced apart along the axis, and wherein the fluid pump is disposed at least partly within the fluid tank between the first axial wall and the second axial wall along the axis.

8. The propulsion system of claim 1, wherein motor is configured in an out-runner configuration.

9. The propulsion system of claim 1, wherein motor is configured in an in-runner configuration.

10. The propulsion system of claim 1, wherein the support structure includes an inner radial wall that extends arcuately about the axis in the circumferential direction, an outer radial wall that extends arcuately about the axis in the circumferential direction, and an intermediate radial wall that extends arcuately about the axis in the circumferential direction, the inner radial wall and the outer radial wall spaced apart in the radial direction, the intermediate radial wall spaced apart in the radial direction from the inner radial wall and the outer radial wall, and the intermediate radial wall defining a boundary for both the fluid tank and the fluid sump.

11. The propulsion system of claim 1, further comprising a propeller that is attached to the rotational output member.

12. The propulsion system of claim 11, wherein the propeller includes variable pitch blades.

13. The propulsion system of claim 1, wherein the rotational output member is disposed proximate a first axial end of the support structure, and further comprising an electronics package that is attached to a second axial end of the support structure, the second axial end being spaced apart along the axis from the first axial end.

14. A method of manufacturing a propulsion system for a vehicle comprising:
providing a support structure that defines an axis;
supporting a rotational output member for rotation about the axis using a bearing, including nesting the support structure and the rotational output member together along the axis;
supporting a motor between the support structure and the rotational output member, the motor configured for driving rotation of the rotational output member relative to the support structure; and
operatively connecting a fluid system configured to circulate a fluid through the propulsion system and supply the fluid to the bearing and to the motor, wherein the fluid system includes a fluid pump extending in a circumferential direction about the axis, a fluid tank defined by the support structure and extending in the circumferential direction about the axis, and a fluid sump defined by the support structure.
